# EUROPÄISCHE PATENTANMELDUNG

(11) **EP 3 540 330 A1**
(43) Veröffentlichungstag der Anmeldung: **18.09.2019**
(21) Anmeldenummer: 18000247.9
(22) Anmeldetag: 12.03.2018
(51) Int. Cl.: F24S 23/30, F24S 23/00

(54) **NACHFÜHR- UND KONZENTRIERUNGSVERFAHREN VON SONNENENERGIE BEI VERWENDUNG VON ZYLINDERLINSEN ZUR SOLARENERGIEGEWINNUNG**

(71) Anmelder: Richard, Gisbert, 22297 Hamburg (DE)
(72) Erfinder: Richard, Gisbert, 22297 Hamburg (DE)

(57) **Zusammenfassung**

Sonnenenergie sammelnde Zylinderlinsen sind dem Problem unterworfen, dass die Richtung der Sonneneinstrahlung im Tagesverlauf wechselt, weswegen eine fortlaufende Nachführung der energiesammelnden Linsensysteme erforderlich ist. Es werden verschiedene Verfahren angegeben, um Sonnenenergie linear optimal zu fokussieren und dadurch den Wirkungsgrad zu erhöhen.

Folgende Verfahren werden beschrieben: eine Nachführung der gesamten Solarlinsensystems, ein Zusatzlinsensystem vor oder hinter der energiesammelnden Zylinderlinse, eine Zusatzlinse, konkav, doppelkonkav oder konvex zur Platzierung vor dem Thermalrohr (Absorber), eine laterale Verschiebung des Thermalrohrs (Absorber), ein Reflektor hinter dem Thermalrohr (Absorber) und eine Kombination dieser Möglichkeiten.

Die verschiedenen Verfahren erlauben, den Wirkungsgrad der energiesammelnden Zylinderlinse signifikant zu verbessern und damit die Temperatur im Thermalrohr während des Betriebes zu erhöhen.

## Beschreibung

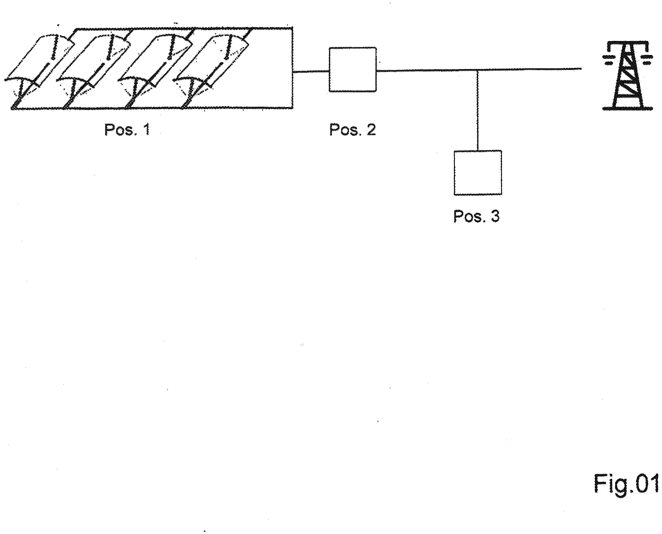

Die Bedeutung der erneuerbaren Energien nimmt ständig zu, wobei in erster Linie die Solarenergie zu nennen ist. Sie wandelt die Sonnenenergie über Wärmeaustauscher um und ermöglicht so die gewünschte Energiegewinnung (Fig. 1).

Hochkonzentrierende, die Sonnenenergie sammelnde Zylinderlinsen sind u.a. dem Problem unterworfen, dass die Sonneneinstrahlung je nach Tageszeit wechselt, sodass eine fortlaufende Nachführung der Energie-sammelnden Linsensysteme erforderlich ist.

Die Erfindung bezieht sich auf verschiedene Verfahren, um bei wechselndem Sonnenstand die Sonnenenergie linear optimal zu fokussieren und dadurch den Wirkungsrad zu erhöhen.

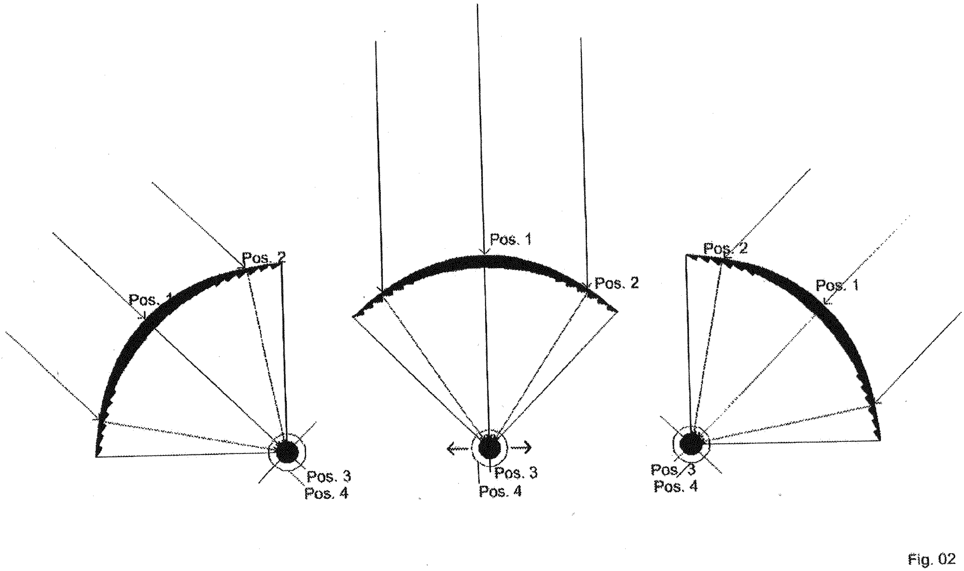

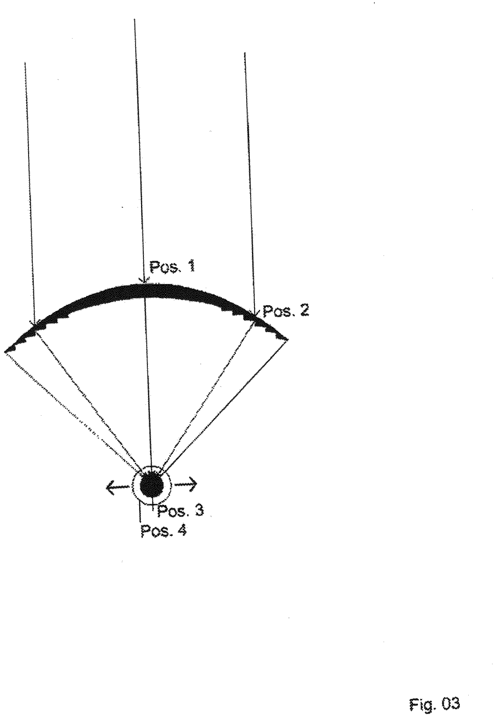

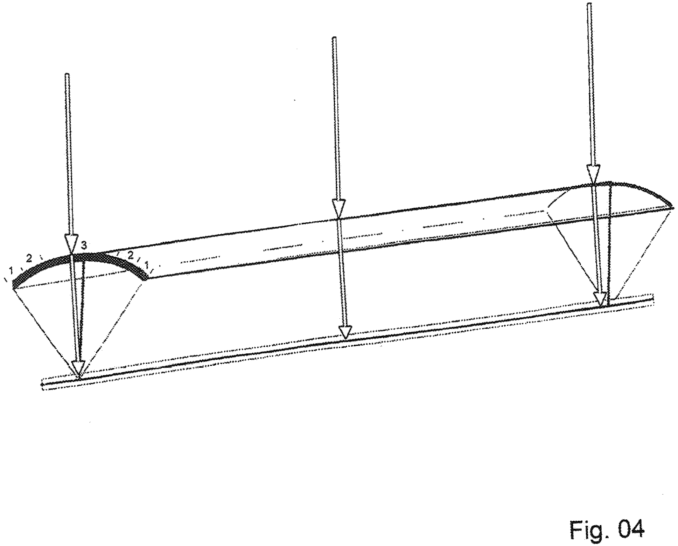

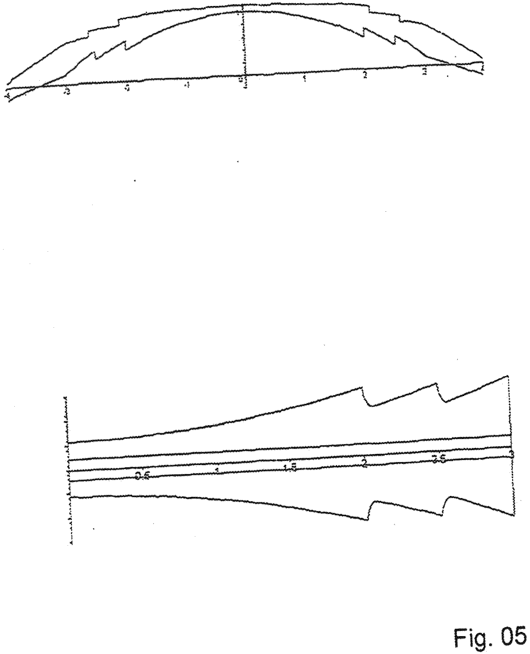

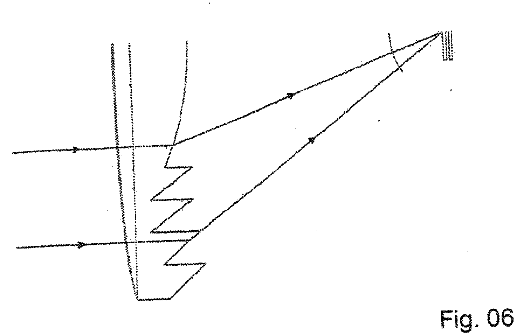

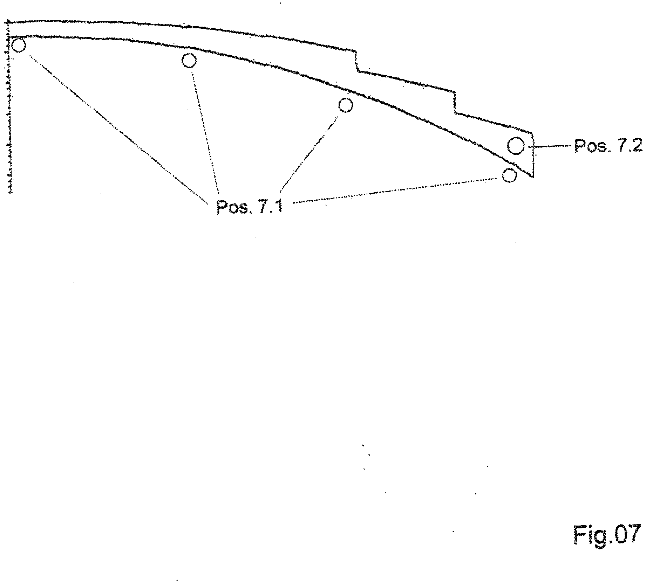

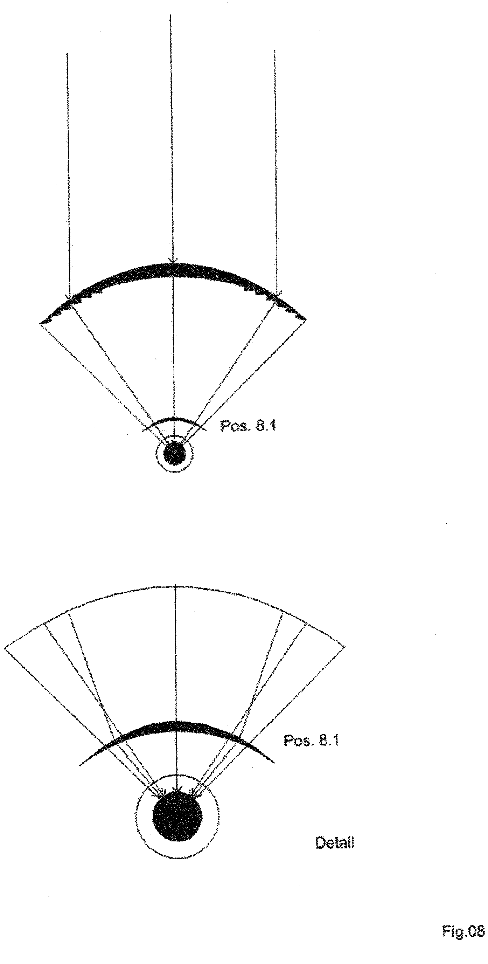

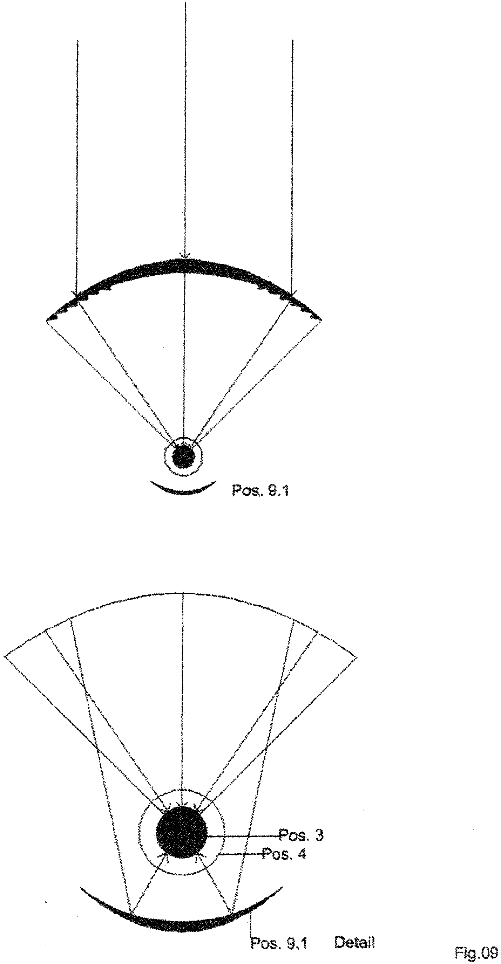

Als Nachführverfahren zur Sicherstellung einer kontinuierlichen Fokussierung von Sonnenenergie stehen zur Verfügung:
1. eine Nachführung der gesamten Solarlinsensysteme (Fig. 2).
2. ein Zusatzlinsensystem vor oder hinter der Zylinderlinse (Fig. 7).
3. eine Zusatzsammellinse, konkav oder doppelkonkav zur Platzierung vor dem Thermalrohr (Absorber) (Fig. 8).
4. eine laterale Verschiebung des Thermalrohres (Fig. 3).
5. ein Reflektor hinter dem Thermalrohr (Absorber) (Fig. 9).
6. eine Kombination dieser Möglichkeiten.

Die Zylinderlinsen bestehen aus Glas oder Kunststoff mit einer schmutzabweisenden glatten Oberfläche (Fig. 2). Da diese Linsen maschinell gefertigt werden, sind in einer Baureihe alle exakt gleich in den Maßen. Die Linsen sind stabil und haben Aufnahmeöffnungen. Sie können deshalb schnell in vorgefertigte Rahmen eingelegt werden.

Alle Teile werden normiert vorgefertigt. Dies gilt auch für die Stahlkonstruktion, in der die Linsen montiert sind. Die Absorberrohre und Gelenke für die den jeweiligen Schwenk basieren auf vorhandener Technik. Die Steuerung der Anlage erfolgt pro Segmenteinheit. Dies bedeutet, dass bis zu 20 Einheiten nebeneinander einen Sensor haben, der die Nachstellung steuert. Ein Stellmotor bewegt die Linsen so lange weiter bis z.B. eine Photozelle an einer bestimmten Stelle aktiviert wird (Fig. 1).

Wandert die Sonne weiter, so bewegt sich auch die Linse, bis der Impulsgeber wieder das Stopp Signal gibt, weil die Sonne genau senkrecht auf die Linse scheint.

Die Energie wird gesammelt im Thermalrohr, in dem z.B. Thermöl oder andere energietransportierende Flüssigkeiten erhitzt werden, das dann durch Wärmetauscher gepumpt wird. In den Wärmetauschern wird die Energie an einen Wasser-/ Dampfkreislauf übertragen, welcher Turbinen antreibt (Fig. 1).

Für seine optimale Effektivität muss das die Energie sammelnde Thermalrohr stets im Fokus der Gesamtwirkung aller Linsensysteme stehen. Auch die Verluste durch den Cosinus Effekt in den Morgen und Abendstunden sollten so gering wie möglich gehalten werden. Folgende Verfahren sorgen dafür, dass die optimale Ausrichtung der rhomboiden Linsensysteme zur Sonne hin, gewährleistet ist.
1. Die ständige Nachführung der rhomboiden Solarlinsen und ihre optimale Ausrichtung auf die Sonne.
2. Da die Zylinderlinsen zur Sonnenenergiegewinnung jedoch einen Durchmesser von 100-500 cm haben, sind sie aufgrund ihres Gewichtes nicht einfach zu bewegen. Daher sind andere Verfahren zur optimalen linearen Fokussierung der Energie erforderlich.

Hierzu gehören Linsensysteme, die zusätzliche optische Eigenschaften haben und damit eine Feinjustierung der Fokussierung erlauben. Hierzu können sowohl refraktive als auch diffraktive optische Anteile eingesetzt werden. Sie können auch zur Korrektur von optischen Abbildungsfehlern (z.B. nach Maßgabe von Wellenfrontmessungen) dienen. Dabei ist es erforderlich, dass zwischen beiden Linsen immer ein Abstand besteht (Fig. 3). Die Zusatzlinse kann später angefertigt werden, jedoch bereits primär eingesetzt werden.

Die Zusatzlinsen können an jeder beliebigen Position entsprechend der optischen Achse der rhomboiden Kollektorlinse (Zylinderlinse) platziert werden, prinzipiell auch hinter dieser Linse. Sie weisen Befestigungselemente auf oder solche, die mit dem Linsenkörper gekoppelt sind und dazu geeignet sind, die Zusatzlinse beweglich zu halten (z.B. durch Lagerung auf Filzmuffen). Der Zusatzlinsenkörper ist vorzugsweise derart gestaltet, dass er zwischen 5 und 15% der Brechkraft der Zylinderlinse hat (Fig. 7).

Der Zusatzlinsenkörper kann aus starren Materialien wie Glas, PMMA oder flexiblen deformierbaren Materialien wie Silikon, Acryl, Polymerwerkstoff oder ähnlichem zusammengesetzt sein.
3. Die horizontale Verschiebung der mit Thermöl oder anderen Flüssigkeiten gefüllten Absorberrohre. Da die Absorberrohre wesentlich leichter sind, als die Zylinderlinsen, ist es sinnvoll, sie lateral zu verschieben und dadurch im Fokus der Sonnenenergie zu halten. In den Morgen- und Abendstunden ist jedoch die Verwendung von Zusatzlinsen erforderlich, um den Cosinus Effekt, das heißt den Effekt des Sonnenaufganges und Sonnenunterganges auszugleichen (Fig. 3).
4. Die Verwendung von zusätzlichen Sammellinsen, die dem Thermalrohr unmittelbar vorgeschaltet sind (Fig. 8).
5. Reflektoren die hinter dem Thermalrohr angelegt sind und eine mögliche Streustrahlung retrograd auf das Thermalrohr fokussieren.
6. Eine Kombination dieser Möglichkeiten (Fig. 9).

## Patentansprüche

1. Erfindungsgemäß wird ein konvex konkaves Zusatzlinsensystem (analog einer Kontaktlinse) beschrieben, das refraktive und diffraktive optische Anteile tragen kann, um einen weiteren Fokuspunkt herzustellen. Es soll eine unpräzise lineare Abbildung durch Zylinderlinsen, die einen Durchmesser zwischen 100 und 500cm haben ausgleichen. Durch Zusatzlinsen können auch ein Torus, Refraktionsausgleich und weitere optische Eigenschaften realisiert werden. Dem Sonnenstand entsprechend soll eine präzise lineare Fokossierung ermöglicht werden, auf das Thermalrohr (Absorber) hin.

2. Erfindungsgemäß kann diese Linse refraktive und diffraktive optische Anteile tragen, um einen weiteren Fokuspunkt herzustellen. Es wird nach Maßgabe von Wellenfrontmessungen angefertigt.

3. Erfindungsgemäß wird ein konvex konkaves Zusatzlinsensystem (analog einer Kontaktlinse) entsprechend dem Anspruch 1 beschrieben, wobei zwischen beiden Linsen ein schmaler Abstand, der durch Abstandshalter (z.B. aus Filz, anderen Materialien oder Rollen) sichergestellt ist. Hierbei kann die Korrekturlinse als Kontaktlinse auch unmittelbar anliegen. Die Zusatzlinse wird mit einem Befestigungselement versehen, das mit einem Linsenkörper gekoppelt ist und dazu dient, die Befestigung der Linse in Relation zur rhomboiden Solarlinse sicherzustellen.

4. Erfindungsgemäß wird ein konvex konkaves Zusatzlinsensystem (analog einer Kontaktlinse) beschrieben, dass prinzipiell vor oder hinter zylindrischen Solarlinse angebracht sein kann

5. Erfindungsgemäß wird ein konvex konkaves Zusatzlinsensystem (analog einer Kontaktlinse) beschrieben, das vorderflächig konvex und rückflächig konvex oder konkav aufgebaut ist.

6. Erfindungsgemäß wird ein konvex konkaves Zusatzlinsensystem (analog einer Kontaktlinse) beschrieben, das vorderflächig konvex und rückflächig plan aufgebaut ist.

7. Erfindungsgemäß wird ein konvex konkaves Zusatzlinsensystem (analog einer Kontaktlinse) beschrieben, das aus Glas, PMMA, Silikon, hydrophilem oder hydrophoben Material (z.B. Acrylat) besteht.

8. Erfindungsgemäß wird ein konvex konkaves Zusatzlinsensystem (analog einer Kontaktlinse) beschrieben, **dadurch gekennzeichnet, dass** es aus einer optischen Zone und einer Randzone besteht.

9. Erfindungsgemäß wird ein konvex konkaves Zusatzlinsensystem (analog einer Kontaktlinse) beschrieben, **dadurch gekennzeichnet, dass** es zusätzlich refraktive oder diffraktive optische Anteile enthält.

10. Erfindungsgemäß wird ein konvex konkaves Zusatzlinsensystem (analog einer Kontaktlinse) beschrieben, **dadurch gekennzeichnet, dass** asphärische und/oder torische und/oder farbfilternde Ausprägungen beinhaltet werde.

11. Erfindungsgemäß wird ein konvex konkaves Zusatzlinsensystem (analog einer Kontaktlinse) beschrieben, **dadurch gekennzeichnet, dass** die erforderliche Korrektur sowohl durch Wellenfrontanalyse als auch durch Analyse der chromatischen und/oder sphärischen Aberrationen analysiert und anschließend kontrolliert ausgeglichen wird.

12. Erfindungsgemäß wird eine Zylinderlinse oder Linsensystem (analog einer Kontaktlinse) beschrieben, dass aus einer optischen Zone und einer Randzone besteht, je nach erforderlicher optischer Korrektur.

13. Erfindungsgemäß wird eine Zylinderlinse oder Linsensystem (analog einer Kontaktlinse) beschrieben, **dadurch gekennzeichnet, dass** die Zusatzlinse refraktive oder diffraktive optische Anteile nach Maßgabe von optischen Meßsystemen (z.B. Wellenfrontmessungen) eine spezifische ggf. irreguläre Korrektion zur Optik beinhaltet.

14. Erfindungsgemäß wird eine Zylinderlinse oder Linsensystem (analog einer Kontaktlinse) beschrieben, das aufgebaut sein kann aus Polymetylacrylat (PMMA), Glas oder flexiblen deformierbaren Materialien, wie beispielsweise Polymerwerkstoff, Acryl oder ähnlichem.

15. Erfindungsgemäß werden Linsenkörper (analog einer Kontaktlinse) zur Korrektur von Sonnenenergie sammelnden Linsensystemen beschrieben, die auf Rollen oder auf Filz gelagert sind, um sie dem Sonnenstand entsprechend in der Lage verändern zu können.
